# EUROPEAN PATENT APPLICATION

(11) **EP 4 184 638 A1**
(43) Date of publication of application: **24.05.2023**
(21) Application number: 22208404.8
(22) Date of filing: 18.11.2022
(51) Int. Cl.: H01M 10/052, H01M 10/42, H01M 50/403, H01M 50/417, H01M 50/449, H01M 50/491

(54) **FUNCTIONALIZED SEPARATORS FOR ELECTROCHEMICAL CELLS, ELECTROCHEMICAL CELLS MADE THEREWITH, AND METHODS OF MAKING EACH OF THE SAME**

(30) Priority: 19.11.2021 US 202163281331 P
(71) Applicant: SES Holdings Pte. Ltd., Singapore 048542 (SG)
(72) Inventor: Liang, Yujia, Melrose, 02176 (US); Son, YongKyu, Bedford, 01730 (US)
(74) Representative: Beyer, Andreas

(57) **Abstract**

Functionalized porous matrices that store functional liquids prior to being installed into an electrochemical cell, such as a battery cell or supercapacitor. In some embodiments, a functionalized porous matrix of the present disclosure may be deployed as a separator in the cell. In some embodiments, the porous matrix provides a storage reservoir for one or more functional liquids that participate(s) in a process within a cell, such as a process that inhibits or prevents growth and/or proliferation of filaments (e.g., dendrites) of an active electrode material. For example, in some embodiments, a functional liquid may be reactive to the active material so that when a filament encounters the functional liquid a reaction between the filament and the functional liquid forms a stable product that inhibits further growth of the filament. In some embodiments, the functional liquid participates in forming a solid electrolyte interphase layer.

## Description

### RELATED APPLICATION DATA

This application claims priority to U.S. Provisional Patent Application Serial No. 63/281,331, filed on November 19, 2021, and titled "FUNCTIONALIZED SEPARATORS FOR ELECTROCHEMICAL CELLS, ELECTROCHEMICAL CELLS MADE THEREWITH, AND METHODS OF MAKING EACH OF THE SAME", which is incorporated by reference herein in its entirety.

### FIELD OF THE DISCLOSURE

The present disclosure relates to separators for electrochemical cells. More particularly, the present disclosure is directed to functionalized separators for electrochemical cells, electrochemical cells made therewith, and methods of making each of the same.

### BACKGROUND

Lithium metal batteries (LMBs) have significantly higher gravimetric and volumetric energy densities than conventional lithium-ion batteries. However, the safety of LMBs is a major bottleneck for promoting the practical application of LMBs. The origins of the safety issues of LMBs are the high reactivity of lithium metal and the rapid growth of lithium filaments (a/k/a "dendrites" and "dendrite structures"). For simplicity, the term "filaments" is used herein to cover dendrites, dendrite structures, and similar structures that form during cell cycling. The lithium filaments can easily penetrate commonly used polypropylene (PP) and polyolefin (PE) separators and cause internal shorts.

Conventional techniques to alleviate the safety issues include solid electrolyte interphase (SEI) engineering and enhancing the mechanical strength of separators. In SEI engineering, additives having high reactivity with lithium metal are added into the liquid electrolyte. Chemical reactions between the electrolyte and the lithium metal result in the formation of an SEI layer on the lithium metal on the anode. Through screening and selectively including additives to electrolytes, a robust SEI layer can be generated on the surface of the lithium metal on the anode. The SEI layer then suppresses the growth of lithium dendrites and enhances the cycle life of LMBs. However, adding additives into electrolytes greatly increases the weight of LMBs, thereby reducing their energy density.

To increase the mechanical strength of the separator, solid-state electrolytes (SSEs) are used. SSEs are ceramic wafers or polymeric composite membranes. They are used either to replace existing PP and PE separators or to coat the separators. The increased mechanical strength can block the penetration of lithium filament through the SSEs. SSEs suffer from one or more disadvantages of poor processability, low ionic conductivity, and inferior charge-discharge-rate capability. In addition, the uneven distribution of lithium ions caused by the nonuniform SSEs can accelerate the growth of lithium filaments and lead to an early termination of battery life.

### SUMMARY OF THE DISCLOSURE

In one implementation, the present disclosure is directed to a functionalized porous matrix for an electrochemical cell. The functionalized porous matrix includes a porous matrix having interconnected matrix interstices formed among structures of the porous matrix; and at least one functional liquid stored, prior to installation into the electrochemical cell, in the interconnected interstices as a coating on corresponding ones of the interconnecting structures so as to form interconnected coating interstices formed among the interconnected matrix interstices.

In another implementation, the present disclosure is directed to an electrochemical cell, which includes an active-metal anode comprising an active metal; a cathode; and a functionalized porous matrix as recited immediately above located between the active-metal anode and the cathode.

In yet another implementation, the present disclosure is directed to a method of making a functionalized porous matrix for an electrochemical cell. The method includes providing a porous matrix having structures defining interconnected matrix interstices; and adding at least one functional liquid to the porous matrix so as to coat the structures with a coating that defines a plurality of interconnected coating interstices among the interconnected matrix interstices.

### BRIEF DESCRIPTION OF THE DRAWINGS

For the purpose of illustration, the accompanying drawings show aspects of one or more embodiments of the invention(s). However, it should be understood that the invention(s) of this disclosure is/are not limited to the precise arrangements and instrumentalities shown in the drawings, wherein:
FIG. 1 is a diagram illustrating an example of a functional liquid stored in a porous matrix, wherein the liquid is coated onto fibers within the porous matrix so as to be present in the interconnected matrix interstices;
FIG. 2 is a graph of boiling points of example liquids that can be used, alone or in any combination with one another, as a functional liquid of the present disclosure;
FIG. 3 is a combination of an exaggerated cross-sectional view of a separator and an adjacent lithium-metal layer and an enlarged view of the separator, illustrating a mechanism for suppressing growth of lithium filaments;
FIG. 4 is an exaggerated cross-sectional view of a separator and an adjacent lithium-metal layer, illustrating another mechanism for suppressing growth of lithium filaments;
FIG. 5A is a Fourier-transform infrared spectroscopy (FTIR) intensity versus wavenumber graph for Separator 1 modified by fluoroethylene carbonate (FEC);
FIG. 5B is an FTIR intensity versus wavenumber graph for Separator 1 modified by dimethylacetamide (DMAC);
FIG. 6A is an FTIR intensity versus wavenumber graph for Separator 2 modified by FEC;
FIG. 6B is an FTIR intensity versus wavenumber graph for Separator 2 modified by DMAC;
FIG. 7A is a cross-sectional view of the cell configuration used for testing Separator 1;
FIG. 7B is a cross-sectional view of the cell configuration used for testing Separator 2;
FIG. 8A is a graph of dQ/dV versus V for lithium-metal test cells made using pristine Separator 1 or modified Separator 1 storing differing liquids as shown, with the data being collected during the 2^{nd} formation cycle at C/10;
FIG. 8B is a graph of dQ/dV versus V for lithium-metal test cells made using pristine Separator 1 or modified Separator 1 storing differing liquids as shown, with the data being collected during the 10^{th} cycle at C/3;
FIG. 8C is a graph of dQ/dV versus V for lithium-metal test cells made using pristine Separator 1 or modified Separator 1 storing differing liquids as shown, with the data being collected during the 30^{th} cycle at C/3;
FIG. 9 is a graph of dQ/dV versus V for lithium-metal test cells made using pristine Separator 2 or modified Separator 2 storing differing liquids as shown, with the data being collected during the 2^{nd} formation cycle at C/10;
FIG. 10 is a chart illustrating the surface composition of the lithium metals of the test cells comprising each of pristine Separator 1, Separator 1 storing FEC, and Separator 1 storing DMAC after cycled at 1/10C;
FIG. 11A is a graph of At % versus etch time illustrating depth profiles of the surface composition of the lithium metal of the test cell comprising pristine Separator 1;
FIG. 11B is a graph of At % versus etch time illustrating depth profiles of the surface composition of the lithium metal of a test cell comprising FEC-modified Separator 1;
FIG. 11C is a graph of At % versus etch time illustrating depth profiles of the surface composition of the lithium metal of the test cell comprising DMAC-modified Separator 1;
FIG. 12 is a graph of capacity retention versus cycle number for lithium-metal test cells made using pristine Separator 1 or modified Separator 1 storing differing liquids as shown, with the cells cycled at 1/3C within 2.7 V to 4.3 V;
FIG. 13 is a graph of coulombic efficiency ("C.E.") versus cycle number for lithium-metal test cells made using pristine Separator 1 or modified Separator 1 storing differing liquids as shown, with the cells cycled at 1/3C within 2.7 V to 4.3 V;
FIG. 14 is a graph of capacity retention versus cycle number for lithium-metal test cells made using pristine Separator 2 or modified Separator 2 storing differing liquids as shown, with the cells cycled at 1/3C within 2.7 V to 4.3 V;
FIG. 15 is a graph of coulombic efficiency ("C.E.") versus cycle number for lithium-metal test cells made using pristine Separator 2 or modified Separator 2 storing differing liquids as shown, with the cells cycled at 1/3C within 2.7 V to 4.3 V; and
FIG. 16 is a high-level diagram illustrating an electrochemical device made in accordance with aspects of the present disclosure.

### DETAILED DESCRIPTION

### General

In some aspects, this disclosure is directed to separators for electrochemical cells (simply "cells" hereinafter), for example, primary and secondary battery cells and supercapacitors, wherein each separator has been functionalized with one or more liquids that participate in one or more processes within the corresponding cell. In some embodiments, a separator is functionalized by causing the separator to provide a reservoir for the one or more liquids deployed specifically for the purpose of participating in the desired process(es). As used herein and in any appended claim and/or any innovation statement, the term "functionalized separator" is used to denote a separator made in accordance with the present disclosure. In this connection, the term "functional liquid" as used herein and in any appended claim and/or innovation statement means a liquid that is selected and deployed to participate in a process within the cell into which a corresponding functional separator containing the functional liquid is deployed and is stored in the separator before any liquid electrolyte solution is added to the functional separator. An example of such a process is a process that inhibits or prevents the growth and/or proliferation of filaments during cycling of the cell.

Processes for which a functionalized separator can be deployed include, but are not limited to, forming a solid electrolyte interphase (SEI) layer on an electrode-active material (e.g., lithium, sodium, potassium, or an alloy of any one or more of these), reacting with filaments of such active material, and otherwise inhibiting formation of active-material filaments from an electrode of a cell and/or penetration of such filaments through the separator, among others. In some embodiments, a functional liquid stored within a functionalized separator of the present disclosure may be a liquid conventionally provided as an additive to the electrolyte (e.g., liquid electrolyte) of the corresponding cell or a liquid having the same or similar properties as such a conventional liquid.

After drying, the amount of each functional liquid stored in the separator, per unit volume, is theoretically (e.g., assuming no vaporization) in the range (0, ϕ^{∗}ρ], with the maximum amount for a separator of volume, V, being ϕ^{∗}ρ^{∗}V. Here, ϕ is the porosity of the separator and ρ is the density of the separator. In the case of storing FEC in example Separator 1, discussed below, ϕ is 65% and ρ is 1.454 g·cm⁻³. Thus, the amounts of FEC stored in Separator 1 is (0, 0.945 g/cm³]. The amount of FEC stored in Separator 2 is (0, 1.12 g/cm³]. It is also workable when the amounts of FEC stored in the Separator 1 is (0, 0.09 g/cm³] and in Separator 2 is (0, 0.1 g/cm³]. Ideally, the amounts of FEC stored in the Separator 1 is (0, 0.00917 g/cm³] and in Separator 2 is (0, 0.0116 g/cm³]. As the densities of the FEC and some other functional liquids have 20% variation (Table 2) as amongst themselves, the amount of the functional liquids stored in the separators will also have 20% variation accordingly. In some embodiments, a functional liquid stored in a functionalized separator may be of a composition that is highly reactive with the active material (e.g., lithium, sodium, potassium, alloy, etc.) of the corresponding anode. In some embodiments, a functional liquid stored in a functionalized separator may be of a composition having low reactivity with the active material.

In some aspects, the present disclosure is directed to cells that include functional separators made in accordance with the present disclosure. In such cells, the configuration of the functional separator, including any one or more of the type(s) of the stored functional liquid(s), the amount(s) of stored functional liquid(s), the porosity of the separator, the number of layers of the separator, the character of each separator layer, the thickness of each separator layer, the location(s) within the separator where each liquid is stored, and/or composition of the separator matrix, among others, may be customized to the particular cell at issue.

In some aspects, the present disclosure is directed to methods of making functional separators for electrochemical devices. Such methods may include adding one or more functional liquids to the separator at any suitable time, such as prior to the separator being deployed into a corresponding cell, including, in some embodiments, prior to the separator being removed from a precursor web of separator material. As used herein for convenience, the term "separator" covers both separators as finally shaped as well as any precursor (e.g., precursor web) from which the separator is made. In some embodiments, once the functional liquid(s) are added, the separator may be partially dried, for example, by heating it to a temperature lower than the boiling point of any of the added functional liquids and/or subjecting it to a vacuum, among others. Methods of making functionalized separators of the present disclosure may also include customizing each separator to the particular cell at issue, including customization directed to any one or more of the type(s) of the stored liquid(s), the amount(s) of stored functional liquid(s), the porosity of the separator, the number of layers of the separator, the character of each separator layer, the thickness of each separator layer, the location(s) within the separator where each functional liquid is stored, and/or composition of the separator matrix, among others.

In some aspects, the present disclosure is directed to methods of making the cells themselves, including addressing any one or more of the customizations of a functional separator to the subject cell as discussed above.

In some embodiments, a functionalized separator of the present disclosure is considered to include a separator comprising a porous matrix, such as a fiber mat, an open-cell foam, etc., having interconnected matrix interstices formed among the structures composed of the material(s) (e.g., polypropylene (PP), polyethylene (PE), ceramic, etc., singly or in any suitable combination). The interconnected matrix interstices are the interconnected spaces within the separator prior to any functional liquid being added to the separator. After one or more functional liquids have been added to the separator to form the now-functionalized separator, the functional liquid(s) fill(s) the interconnected matrix interstices. During the drying process, the majority of the filled liquid(s) can vaporize, while some of the added liquid(s) on the surface of interconnecting structures remain and form a coating on the interconnecting structures. These coatings do not fully block the interconnected matrix interstices but rather define interconnected coating interstices, which are open regions defined by the functional-liquid coating. In other words, the interconnected coating interstices are open regions formed within the interconnected matrix interstices by the presence of the functional-liquid coating. When the functionalized separator is deployed in a working electrochemical cell along with a liquid electrolyte, the liquid electrolyte saturates the functionalized separator in these interconnected coating interstices, which allow ions within the liquid electrolyte to flow between the cathode and anode as usual. It is noted that the functional separator may comprise a single layer or multiple layers. When multiple layers are present, one or more, including all, of the layers may be functionalized according to a particular design. In some embodiments, when a multi-layer separator is functionalized, at least the layer that will be closest to the anode of the electrochemical cell when deployed for service will be a functionalized layer functionalized in accordance with this disclosure.

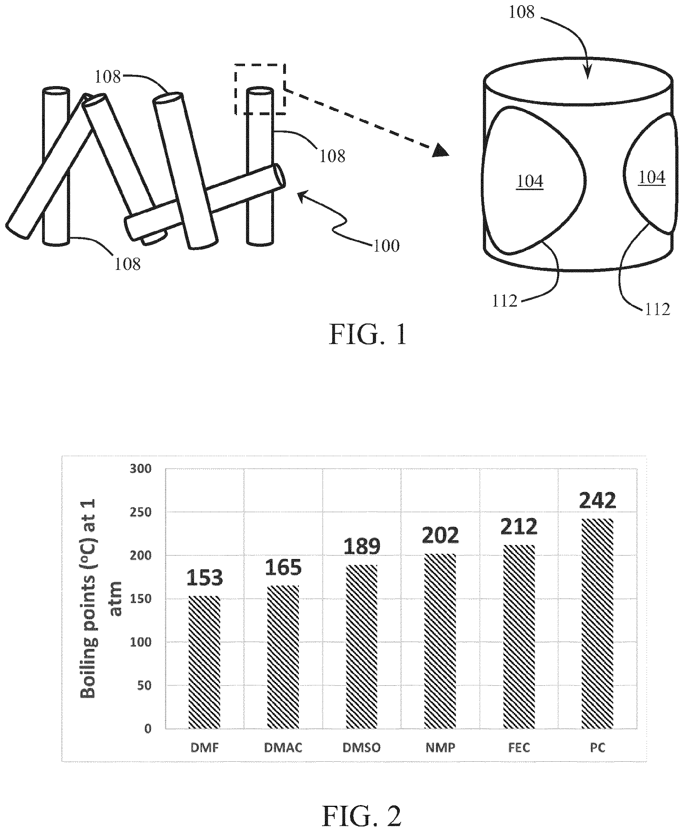

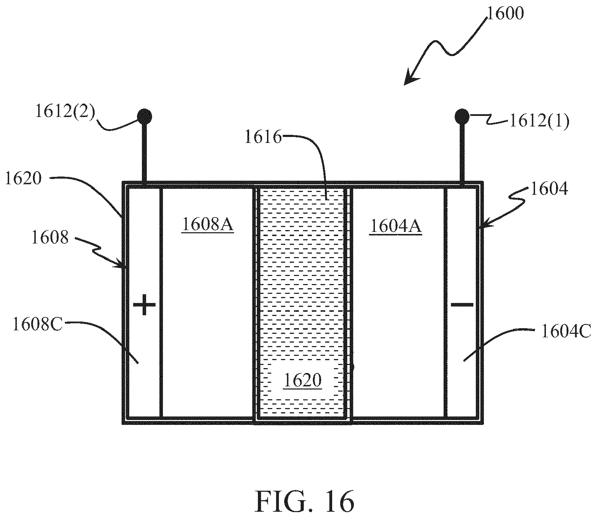

FIG. 1 illustrates an example of a porous matrix 100 (e.g., a porous separator) acting as a reservoir for a functional liquid 104 added to the porous matrix before the porous matrix is deployed into a cell (not shown, but see, e.g., the cell 1600 of FIG. 16), for example as a separator. In this example, the porous matrix 100 comprises a mat of fibers 108 (only a few labeled to avoid clutter), and the functional liquid 104 is present in coatings on ones of the fibers, for example, in a relatively small amount. In this example and as seen in the enlargement of FIG. 1, the functional liquid 104 does not fully coat the fibers 108, but rather is present only in discrete coating regions 112 that are generally spaced apart from one another. In other embodiments, the functional liquid 104 may fully coat all, some, or none of the fibers 108, may partially coat all, some, or none of the fibers, or may partially coat some of the fibers while fully coating some of the fibers. In all cases, the coating(s), whether continuous, in discrete regions, or a combination thereof, is/are present within the interconnected interstices among the interconnecting structures of the porous matrix 100 so as to form interconnected coating interstices. It is noted that the term "interconnected coating interstices" describes a condition in which the intentionally stored functional liquid(s) is/are present in the porous matrix 100 in any non-zero amount.

In some embodiments, adding one or more functional liquids to a porous matrix (e.g., separator) may include first saturating the porous matrix with the functional liquid(s) and then removing a portion of the functional liquid(s), for example, by drying, to ensure the formation of the interconnected coating interstices within the interconnected matrix interstices. The portion of the functional liquid(s) may be removed using any suitable process, such as by heating the functional liquid(s) in the porous matrix to a temperature lower than the boiling point(s) of the functional liquid(s) either within or without a vacuum. This removal step should be carefully controlled so as to not drive too much of the functional liquid(s) out of the porous matrix.

### Examples

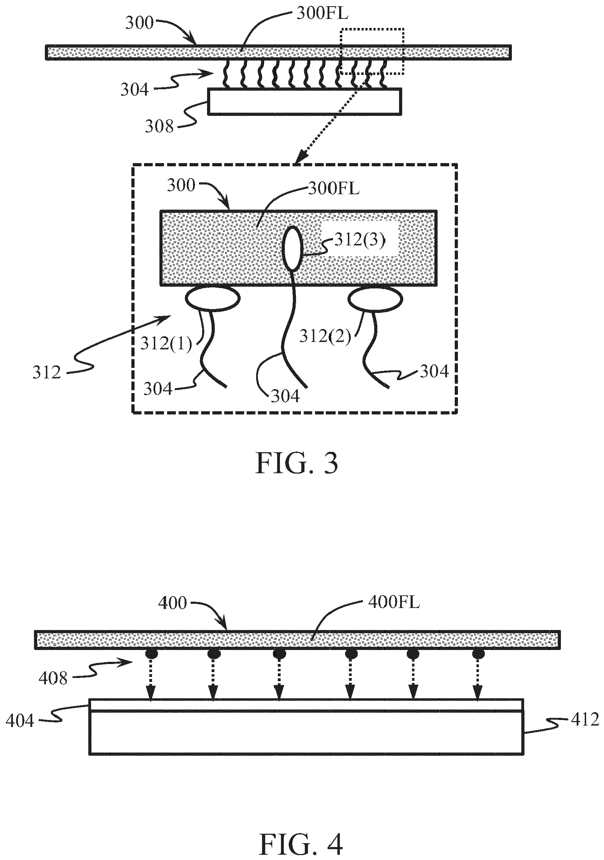

In an example, functional separators may be provided to suppress lithium-filament growth in a cell by using the separators within the cell as reservoirs to store functional liquids that can readily react with lithium metal. Although commonly seen polypropylene (PP) or polyethylene (PE) separators have various porosities, the typical minimum porosity of separators is 45% for reducing the impedance of lithium-ion (Li⁺) migration through them. Nonlimiting, example porosities of example separators used in this work is listed in Table 1, below. Nonlimiting example highly reactive liquids and their boiling points are presented in accompanying FIG. 2. The porous structure of separators provides space to store the functional liquid(s) (e.g., dimethylformamide (DMF) and dimethyl sulfoxide (DMSO)) that can readily react with each lithium filament once the filament begins to penetrate the separator (see, e.g., FIG. 3, discussed below). In other scenarios, the stored functional liquid(s) can migrate to the lithium metal surface during cycling. Those fuctional liquids can readily react with lithium metal and form a robust SEI layer to protect the lithium metal beneath the surface (see, e.g., FIG. 4 discussed below). By using separators as reservoirs, the amount of added functional liquids can be minimized. In contrast, some conventional methods use pipettes to transfer those additives into electrolytes, which is normally in a relatively large volume. Thus, conventional techniques regard the highly reactive functional liquids as incompatible with lithium metal and suggest excluding them in lithium-metal batteries (LMBs) as appropriate.

**Table 1: Separators used in this disclosure**

| | Main components | Porosity (%) |
|---|---|---|
| Separator 1 | PE with ceramic fillers | 65 |
| Separator 2 | PE | 70 |
| Separator 3 | PP | 45 |

### Example Working Mechanisms

The porous structures, i.e., the interconnected matrix interstices, of separators are ideal spaces to store functional liquids, such as liquids that are considered as "incompatible" with lithium metal. "Incompatible" liquids have high reactivity with lithium metal and easily consume lithium metal. As depicted in FIG. 3, embodiments of the present disclosure utilize the high reactivities of any one or more of various incompatible functional liquids 300FL stored in a porous matrix (here, a separator 300) to prevent the penetration of lithium filaments 304, here filaments from a lithium-metal anode 308, through the separator 300. The lithium filaments 304 can immediately react with the "incompatible" reactive functional liquid(s) 300FL stored in the separator 300 and convert them to chemically stable products 312, for example, at the surface of the separator 300 as illustrated at stable products 312(1) and 312(2) or within interstices (not illustrated) within the separator as illustrated at stable product 312(3). There are three different examples of separators exemplified in this disclosure, as listed in Table 1, above, and any one of those can be used as the separator 300 of FIG. 3. However, any separator other than the ones listed in Table 1 are also applicable in scenarios described in this disclosure, including the scenario depicted in FIGS. 3, 4, 7A, and 7B. The reactivities of the functional liquid(s) used for functional liquid(s) 300FL are difficult to be quantified as they are correlated to various testing conditions. Here, the standard enthalpy of formation is used to represent the reactivity. Data were collected from U.S. National Institute of Standards and Technology (NIST) Webbook (Table 2, below). The smaller the standard enthalpy of formation, the more stable the compound is. Thus, PC is far more stable than DMSO or DMSO is more reactive than PC.

**Table 2: Enthalpies of formation and densities of example solvents**

| | DMF | DMAC | DMSO | NMP | PC |
|---|---|---|---|---|---|
| Δ_{f}H°_{liquid} (kJ/mol) | -239.4 | -300.1 | -203.4 | -265.73 | -613 |
| Density (g/mL and g/cm³) | 0.994 | 0.94 | 1.1 | 1.03 | 1.18 |

While FIG. 3 illustrates one example working mechanism in which filaments 304 react with the reactive functional liquid(s) 300FL present in the separator 300, FIG. 4 illustrates another working mechanism in which one or more functional liquids 400FL stored in a separator 400 participate in forming an SEI layer 404. In this route, the residual functional liquid(s) 400FL stored in the separator 400 migrate(s) (as illustrated at 408) to lithium metal 412 and convert(s) to the SEI layer 404.

### Example Modification of the Separators with Liquids Incompatible with Li Metal

As depicted in FIG. 3, the interconnected matrix interstices of the separator 300 contain residual functional liquid 300FL, for example, one or more solvents, such as DMF, DMSO, and/or dimethylacetamide (DMAC), which are all considered incompatible with lithium metal. To obtain example functionalized separators, Separators 1 and 2 were soaked, separately, in an incompatible liquid, here, DMF, DMSO, and DMAC, for use as the functional liquids. These three liquids are representative functional liquids considered as incompatible with the lithium metal and are nonlimiting. To demonstrate the broader application of principles of the present disclosure, fluoroethylene carbonate (FEC) was also used as an example of liquids that are commonly used as an additive in LMBs and that are generally considered compatible with lithium metal.

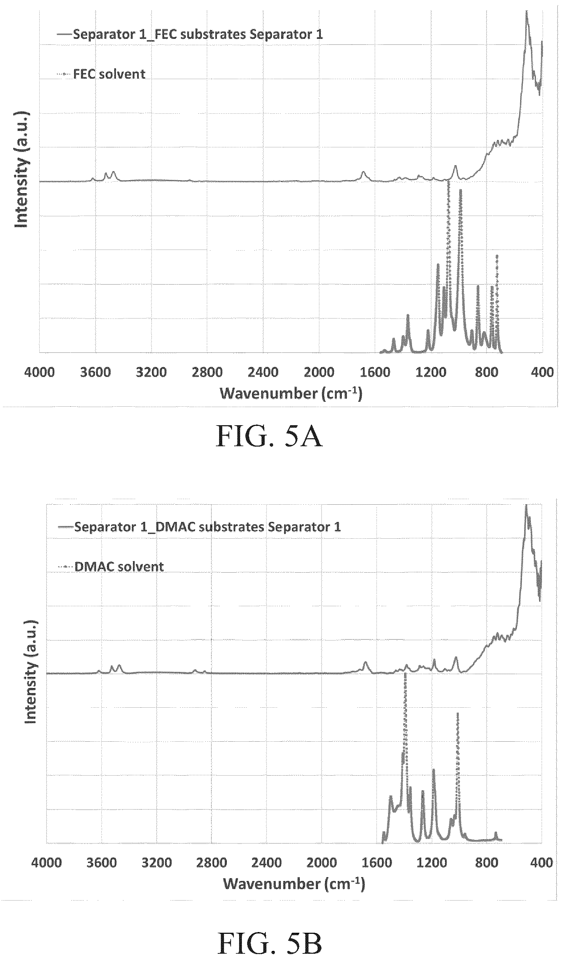

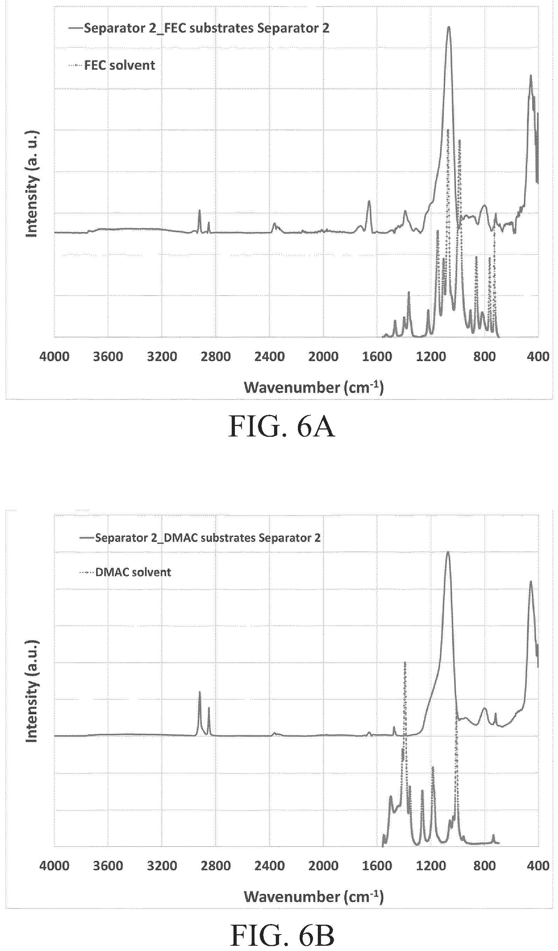

After soaking Separators 1 and 2 in these liquids, they were dried in a vacuum at 60°C for 10 hours. 60°C is an exemplary temperature that is significantly lower than the boiling points of the liquids shown in FIG. 2. Temperatures lower than the boiling points of the liquids all apply in this disclosure. Vacuum is also not a compulsory condition. Any conditions that can vaporize the liquids work in this disclosure. Thus, after Separators 1 and 2 were dried, residual functional liquids comprising DMAC or FEC were still observed in the interconnected matrix interstices of the separators, as demonstrated in FIGS. 5A through 6B for Separators 1 and 2. In each of FIGS. 5A through 6B, the upper curve was obtained by subtracting the signal of the separator alone from the signal of the corresponding liquid-modified separator. The curve at the bottom of each graph is the signal of corresponding pure added liquid. Although the porosities of Separators 1 and 2 are different, the residual solvents were observed in all dried samples. Fourier transfer infrared spectroscopy (FTIR) results validated the successful modification of the separators by the design liquids.

### Electrochemical performance

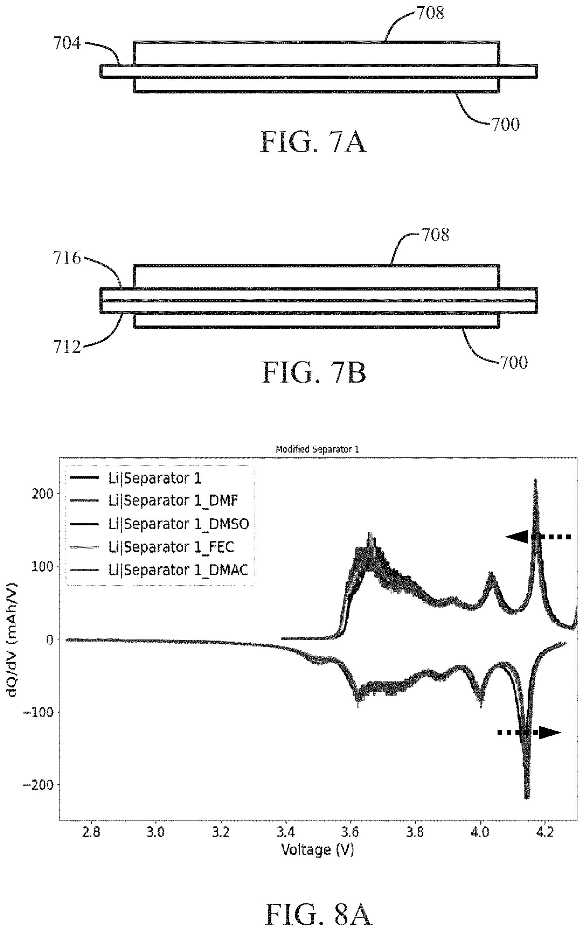

While making LMB test cells using the modified separators, Separator 1 and modified Separator 1 were used directly with lithium metal and a cathode on opposite sides of the separators. As shown in FIG. 7A, the stacking sequence used was lithium metal 700, Separator 1 or modified Separator 1 (individually, 704), and a cathode 708 from bottom to top of FIG. 7A. For Separator 2 and modified Separator 2, the high porosity of Separator 2 prompted using an additional, less porous, Separator 3 to prevent the short-circuit of the LMB test cells. Thus, the stacking sequence for the (modified) Separator 2 used, as seen in FIG. 7B, was lithium metal 700, Separator 2 or modified Separator 2 (individually 712), Separator 3 716, and the cathode 708. All of the cells were made using a mixture of diethyl ether (DEE) and 2,2,2-trifluoroethanol (TFE) as a catholyte. By "catholyte" it is meant that electrolyte was added to the cathode side before stacking the components of the cells, and the amount added was less than 1.2 g/Ah.

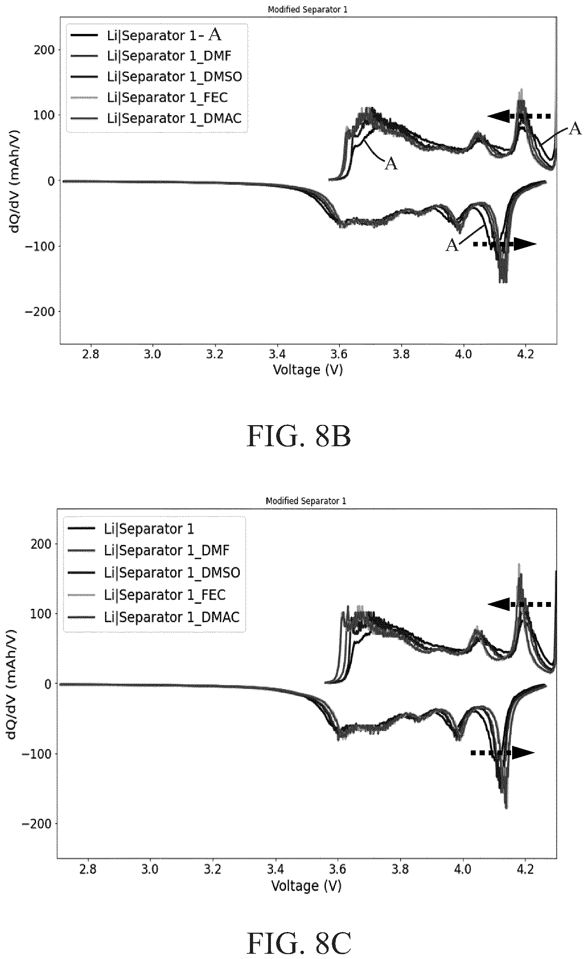

FIG. 8A presents dQ/dV versus V data collected during the second formation cycles at 0.1C for LMBs made using Separator 1 and Separator 1 modified by various liquids as noted (1C = 3 Ah/cm²). The dQ/dV versus V diagram of FIG. 8A illustrates the fact that the modification of the separators did not significantly change the electrochemistry on the cathode side. All of the peaks of the modified samples were tracked in the pristine (i.e., non-modified-separator) Separator 1 cell. Compared with the pristine Separator 1, the peaks of the samples containing the modified separators moved towards lower voltages during charging, while the peaks in discharging shifted to higher voltages. This phenomenon substantiates the better reversibility of the LMB test cells made using the modified separators. The enhanced reversibility was further retained during cycling at C/3. The dQ/dV versus V data of a 10^{th} cycle at C/3 (FIG. 8B) is consistent with the data of FIG. 8A. As seen in FIG. 8B, with modification by the liquids, the redox peaks during charging moved towards the lower end of the voltage range while the peaks during discharging migrated to the higher end. Even after 30 cycles, the reversibility of the modified separator was still better than the pristine Separator 1, as shown in FIG. 8C.

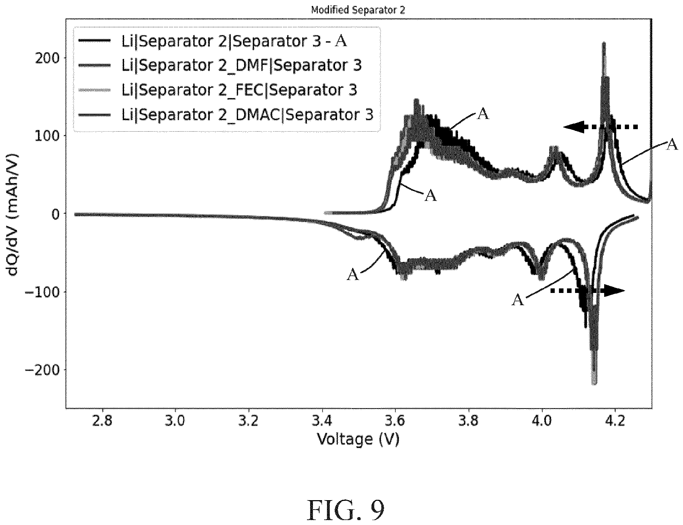

The enhanced reversibility was also observed in the modified Separator 2. The redox peaks of the modified samples moved towards the lower end of the voltage range during charging while moved towards the higher end during discharging, as shown in FIG. 9. Moreover, all of the redox peaks in the modified samples were tracked in the pristine Separator 2. Based on these example graphs of dQ/dV versus V, a theory of the main working mechanism of the stored liquids is presented in FIG. 3, discussed above. However, the possibility of the pathway shown in FIG. 4, also discussed above, cannot be ruled-out. In this connection, it is noted that the working mechanism(s) at play are currently theoretical and, therefore, the performance characteristics are not necessarily tied to any particular working mechanism(s) occurring in any particular instantiation.

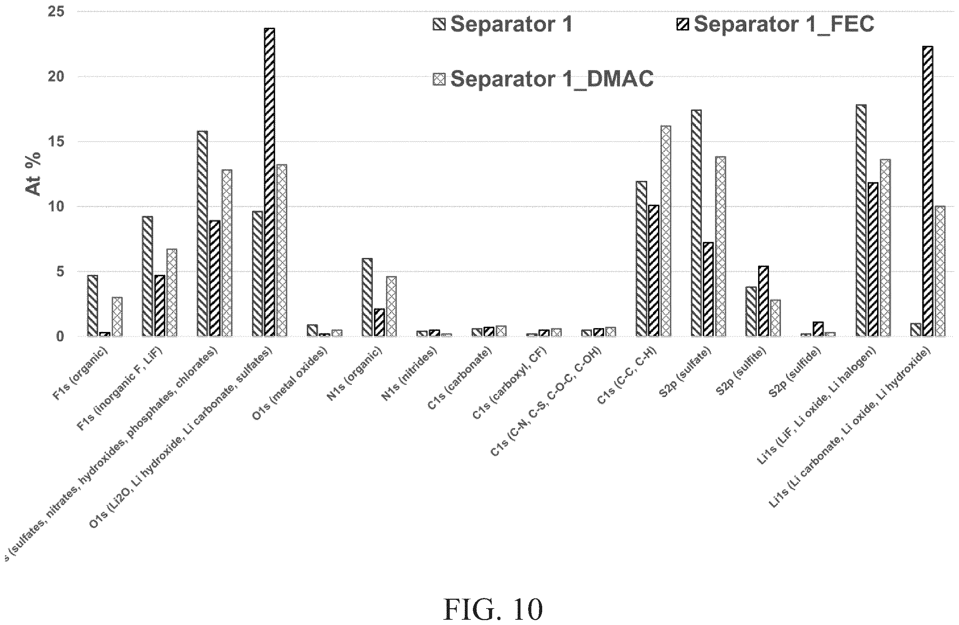

LMB test cells using Separator 1, Separator 1 modified by FEC (Separator 1_FFC), and Separator modified by DMAC (Separator 1_DMAC) were cycled at 1/10 C for 1 cycle. Then, those cells were disassembled in a discharged state, with the lithium metal characterized by X-ray photoelectron spectroscopy (XPS) for surface analysis. Results of this analysis are shown in FIG. 10. The usage of pristine Separator 1 resulted in a readily formed SEI layer with LiF as the main component. This demonstrated that the SEI in the pristine Separator 1 embodiment is the product of lithium metal reacting with the TFE in the liquid electrolyte.

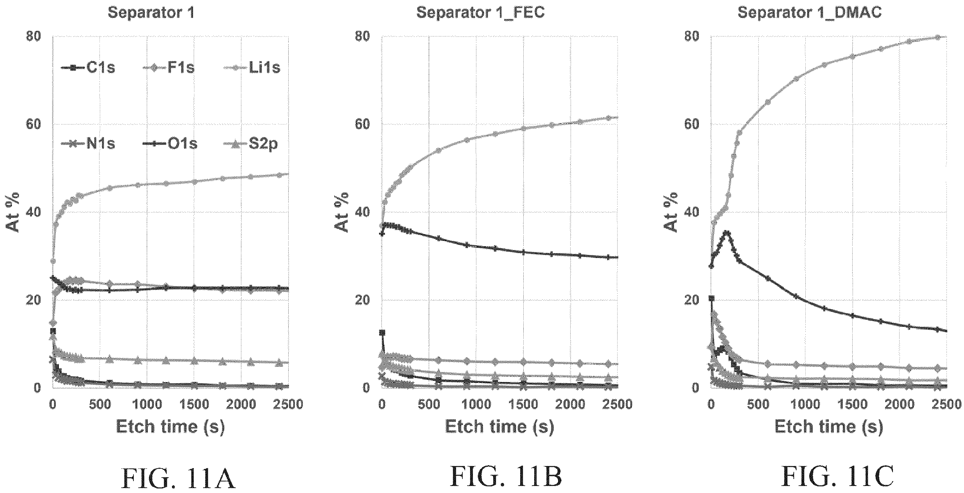

Regarding the modified separators, the Separator 1_FEC and Separator 1_DMAC released portions of their liquids towards the lithium metal following the mechanism illustrated in FIG. 4. Thus, the resultant SEI layer reflects the reaction between the lithium metal with the FEC and the DMAC, rather than the TFE in the liquid electrolyte. The surface compositions of the lithium metals are lithium organometallic salts. Compared with the pristine Separator 1 embodiment, the lithium concentration increased significantly beneath the surface of the anodes in the modified embodiments, as seen in FIGS. 11A through 11C. Comparing each of FIG. 11B (FEC-storing Separator 1) and FIG. 11C (DMAC-storing Separator 1) to FIG. 11A (pristine Separator 1), it is seen that the SEI layers on the lithium metal in the FEC- and DMAC-modified-separator cells are thinner than the SEI layers in pristine separator cells.

As also seen by comparing the plots of FIGS. 11A through 11C with one another, the modified separators contributed to oxygen-based compounds on the lithium-metal surface, which is typically the SEI. The concentration of the oxygen-based compounds initially increased with the depth into lithium-metal bulk but then immediately decreased. This phenomenon validates that the high reactivity of the modified-separator liquids intensively reacted with the surface lithium and produced an SEI layer that can protect the lithium beneath the surface to keep it intact. On the contrary, the SEI composition in the pristine Separator 1 embodiment was stable for a long depth into the lithium metal. The introduction of the liquids, here, the FEC and the DMAC, into the separators inhibited chemical reactions between the liquid electrolyte and the lithium metal. This may help increase the cycle life of the LMB test cells, as the reactions between the lithium metal and the liquid electrolyte is minimized, as is the consumption of the liquid electrolyte.

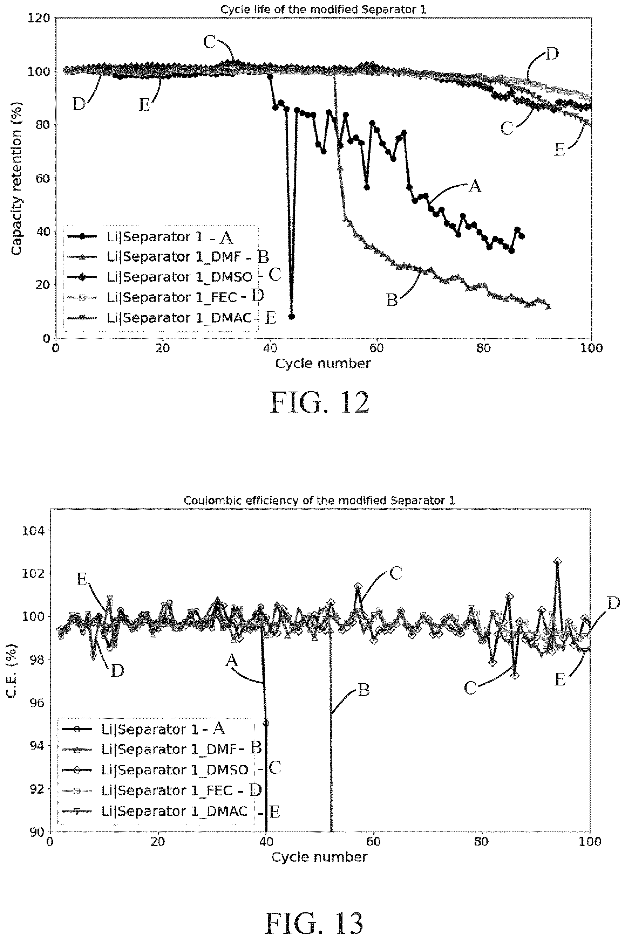

The high reversibility of the LMB test cells using modified separators delivered improved cycling stability and enhanced Coulombic efficiency. As shown in FIG. 12, the curve A is the baseline tested using the pristine Separator 1. This illustrates a cycle life of 40 cycles with the catholyte, or lean electrolyte. When using the modified Separator 1, the cycle life was improved to 50 cycles (modified by DMF) and 100 cycles (modified by DMAC, FEC, and DMSO) with capacity retention higher than 80%. As shown in FIG. 13, the Coulombic efficiencies fluctuated around 100% and were significantly improved compared with the pristine Separator 1.

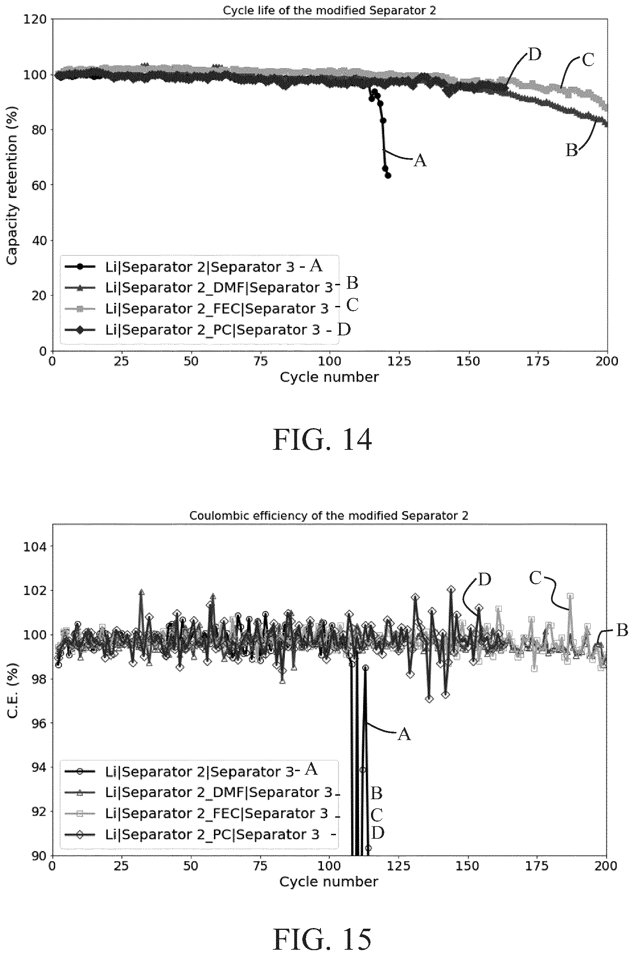

The LMB test cells made using the modified Separator 2 also demonstrates the enhanced cycling stability and improved efficiency compared to those made using the pristine Separator 2. The high porosity of Separator 2 results in easy short-circuiting. Thus, an additional and more mechanically robust Separator 3 was added to prevent the short-circuiting, as depicted in FIG. 7B. In this example, Separator 3 was used without modification by the liquids. However, it can be modified in other scenarios. The pristine Separator 2 delivered a cycle life of about 110 cycles. Applying the modified separators, the Separator 2_DMF Separator 2_FEC delivered a cycle life of about 200 cycles, as shown in FIG. 14. The Separator 2_PC delivered a cycle life of more than 125 cycles. The efficiencies of the modified separators displayed a straight line at 100% with narrow fluctuations, as shown in FIG. 15.

FIG. 16 illustrates a cell 1600 made in accordance with aspects of the present disclosure. Those skilled in the art will readily appreciate that the cell 1600 can be, for example, a battery cell (e.g., LMB cell or cell based on another alkali metal chemistry, among others) or a supercapacitor cell. In addition, those skilled in the art will readily understand that FIG. 16 illustrates only some basic functional components of the cell 1600 and that a real-world instantiation of the cell, such as a secondary battery or a supercapacitor, will typically be embodied in either a stacked construction or a wound construction. Further, those skilled in the art will understand that the cell 1600 will include other components, such as one or more seals, thermal shutdown layers, and/or vents, among other things, that, for ease of illustration, are not shown in FIG. 16.

In this example, the cell 1600 includes an anode 1604 and a cathode 1608 that are spaced apart from one another and include corresponding active materials 1604A and 1608A and a pair of respective current collectors 1604C and 1608C. The current collectors 1604C
and 1608C are electrically connected to corresponding electrical terminals 1612(1) and 1612(2), such as tabs in a pouch-type construction. At least one porous dielectric separator 1616 made in accordance with the present disclosure is located between the anode 1604 and cathode 1608 to electrically separate the anode and cathode but to allow ions of a liquid electrolyte 1620 to flow therethrough.

As those skilled in the art will understand, depending upon the type and design of the cell 1600, each of the anode 1604 and cathode 1608 comprises one or more suitable materials that gain or lose ions via the liquid electrolyte 1620 depending on whether the cell is being charged or discharged. Each of the active materials 1604A and 1608A may be any suitable material for the anode 1604 and cathode 1608, respectively. Examples of anode active materials 1604A include alkali-metal-based materials, such as pure lithium, pure sodium, pure potassium, and alloys thereof, among others. Examples of cathode-active materials 1608A include crystalline oxides comprising various amounts of cobalt, nickel, and manganese, among many others. Each of the current collectors 1604C and 1608C may be made of any suitable electrically conducting material, such as copper or aluminum, or any combination thereof. The porous separator 1616 may be made of any suitable dielectric material, such as a polymer (e.g., PP, PE, a PP/PE hybrid, etc.), among others. Various battery and supercapacitor constructions that can be used for constructing the cell 1600 of FIG. 16, are known in the art. If any of such known constructions is used, a novelty of the cell 1600 lies in the modified, reservoir-type separator 1616 made in accordance with the present disclosure.

Various modifications and additions can be made without departing from the spirit and scope of this invention. Features of each of the various embodiments described above may be combined with features of other described embodiments as appropriate in order to provide a multiplicity of feature combinations in associated new embodiments. Furthermore, while the foregoing describes a number of separate embodiments, what has been described herein is merely illustrative of the application of the principles of the present invention. Additionally, although particular methods herein may be illustrated and/or described as being performed in a specific order, the ordering is highly variable within ordinary skill to achieve aspects of the present disclosure. Accordingly, this description is meant to be taken only by way of example, and not to otherwise limit the scope of this invention.

Exemplary embodiments have been disclosed above and illustrated in the accompanying drawings. It will be understood by those skilled in the art that various changes, omissions and additions may be made to that which is specifically disclosed herein without departing from the spirit and scope of the present invention.

## Claims

1. A functionalized porous matrix for an electrochemical cell, the functionalized porous matrix comprising:
a porous matrix having interconnected matrix interstices formed among structures of the porous matrix; and
at least one functional liquid stored, prior to installation into the electrochemical cell, in the interconnected interstices as a coating on corresponding ones of the interconnecting structures so as to form interconnected coating interstices formed among the interconnected matrix interstices.

2. The functionalized porous matrix of claim 1, wherein the porous matrix is a separator for the electrochemical cell.

3. The functionalized porous matrix of either claim 1 or claim 2, wherein the porous matrix comprises polyethylene, or polypropylene.

4. The functionalized porous matrix of any one of claims 1 to 3, wherein the electrochemical cell comprises an active metal, preferably lithium, that forms filaments during cycling of the electrochemical cell, and the at least one functional liquid is selected and added to the porous matrix to be highly reactive to the active metal.

5. The functionalized porous matrix of one of claims 1 to 4, wherein the at least one functional liquid is selected from the group consisting of DMF, DMSO, DMAC, and FEC.

6. The functionalized porous matrix of any one of claims 1 to 5, wherein the electrochemical cell comprises an active-metal anode comprising an active metal, and the at least one functional liquid is selected and added to the porous matrix to react with the active metal so as to form a solid electrolyte interphase layer.

7. An electrochemical cell, comprising:
an active-metal anode comprising an active metal;
a cathode; and
a functionalized porous matrix of any one of claims 1 to 6 located between the active-metal anode and the cathode.

8. A method of making a functionalized porous matrix for an electrochemical cell, the method comprising:
providing a porous matrix having structures defining interconnected matrix interstices; and
adding at least one functional liquid to the porous matrix so as to coat the structures with a coating that defines a plurality of interconnected coating interstices among the interconnected matrix interstices.

9. The method of claim 8, wherein adding at least one functional liquid occurs prior to deploying the functionalized porous matrix in the electrochemical cell, wherin the functionalized porous matrix in the electrochemical cell is preferably deployed as a separator.

10. The method of any one of claims 8 or 9, wherein adding at least one functional liquid includes partially drying the at least one functional liquid so as to remove a portion of the at least one functional liquid.

11. The method of any one of claims 8 to 10, wherein the at least one functional liquid has a minimum boiling point, and drying the at least one functional liquid includes applying heat, preferably under a vacuum, to the at least one functional liquid and the porous matrix to a temperature less than the minimum boiling point.

12. The method of any one of claims 8 to 11, further comprising selecting an incompatible liquid as one of the at least one functional liquids, the incompatible liquid being reactive with an active metal for which the functionalized porous matrix is designed to be deployed.

13. The method of claim 12, wherein the incompatible liquid reacts with a filament of the active metal, which preferably comprises lithium, so as to produce a stable product.

14. The method of any one of claims 8 to 13, wherein adding at least one functional liquid includes adding a liquid that is reactive to an active metal for which the functionalized separator is designed to be deployed and is conventionally used as an additive in electrolyte, wherein the incompatible liquid is preferably selected to react with any filament of the active metal that contacts the functionalized separator.

15. The method of any one of claims 8 to 14, further comprising selecting as one of the at least one functional liquids, a liquid that participates in forming a solid electrolyte interphase layer within the electrochemical cell for which the functionalized porous matrix is designed to be deployed.

16. The method of any one of claims 8 to 15, wherein the at least one functional liquid is selected from the group consisting of DMF, DMSO, DMAC, and FEC.
